# EUROPÄISCHE PATENTSCHRIFT

(11) **EP 1 714 538 B1**
(45) Veröffentlichungstag und Bekanntmachung des Hinweises auf die Patenterteilung: **31.10.2007**
(21) Anmeldenummer: 05008943.2
(22) Anmeldetag: 23.04.2005
(51) Int. Cl.: A01B 61/04

(54) **Arbeitsgerät**
Working machine
Outil de travail

(43) Veröffentlichungstag der Anmeldung: 25.10.2006
(73) Patentinhaber: Müthing GmbH & Co. KG, 59955 Winterberg (DE)
(72) Erfinder: Wiegert, Ludger, 48346 Ostbevern (DE); Müthing, Michael, 59955 Winterberg (DE)
(74) Vertreter: Lempert, Jost

(56) Entgegenhaltungen:
- EP-A- 0 525 402
- DE-A1- 4 305 648
- DE-A1- 10 019 378
- DE-C- 975 103
- DE-U1- 9 016 081
- NL-A- 248 180

## Beschreibung

Die Erfindung betrifft ein Arbeitsgerät mit einem Anbaurahmen und einem Arbeitswerkzeug.

Derartige Arbeitsgeräte werden über den Anbaurahmen an einem Fahrzeug befestigt. Das Arbeitswerkzeug kann ein Mäher, ein Mulcher, eine Fräse, wie eine Streifenfräse, oder dergleichen, sein. Es erstreckt sich in der Regel quer zur Bewegungsrichtung des Fahrzeugs und weist damit einen sich üblicherweise quer zur Bewegungsrichtung des Fahrzeugs erstreckenden um eine Grundstellung horizontale Achse drehbaren Rotor mit Messern oder Klingen auf. Das Arbeitswerkzeug kann auch quer zur Fahrtrichtung des Fahrzeugs nebeneinander angeordnete sogenannte Scheiben oder Trommeln mit sich im Wesentlichen vertikal erstreckenden Drehachsen aufweisen. Andersartige Arbeitswerkzeuge sind ebenfalls bekannt. Während, wie gesagt, der Anbaurahmen fest, d.h. nicht frei beweglich am Fahrzeug befestigt ist, sind bei bekannten Arbeitsgeräten die Arbeitswerkzeuge mit dem Anbaurahmen relativ zu diesem in begrenztem Umfange beweglich verbunden, nämlich entweder mit einem Rotationsfreiheitsgrad schwenkbar um eine sich in Fahrtrichtung des Fahrzeugs erstreckende Schwenkachse oder aber zur Anpassung an Bodenunebenheiten im Wesentlichen linear versetzbar mittels eines Parallelogrammgestänges. Hierdurch kann ein vollständiges Folgen des Arbeitswerkzeugs an Bodenunebenheiten und eine Anpassung an dieselben nicht erreicht werden, so dass das Arbeitsergebnis unbefriedigend ist, beispielsweise beim Mähen oder Mulchen dadurch, dass sich das Arbeitswerkzeug in einigen Fällen, beispielsweise bei Unebenheiten an einer Seite weit vom Boden abhebt, an der anderen Seite offen aufliegt, wodurch sehr unterschiedliche Mähhöhen bedingt sind. Außerdem führt die relative Unbeweglichkeit der bekannten Anbauvorrichtungen zu starken Belastungen (Hebelwirkungen) der Achsen des Fahrzeugs.

Aus der DE 100 19 378 A1 ist ein Arbeitsgerät bekannt, bei dem das Arbeitswerkzeug einerseits an seiner Vorderseite durch einen über das Arbeitswerkzeug hin herausragenden mittigen Bügel getragen und im rückwärtigen Bereich durch seitlich angeordnete kurze Ketten an der Einbaurichtung gehalten wird.

Aus der DE 41 37 717 A1 ist ein Arbeitsgerät mit einem ein Rotationsmähwerkzeug tragenden Tragrahmen bekannt. Das Rotationsmähwerk ist dabei mittels eines mittigen Gelenks am Tragrahmen angelenkt und zum anderen über an fest mit dem Werkzeug verbundenen Hebelarm angreifenden Verstellspindeln gehalten, mittels derer ein mittlerer Grundzustand des Rotationsmähwerks einstellbar ist. Dieses ist relativ zum Tragrahmen in keiner Weise beweglich.

Die DE 17 82 942 B2 zeigt eine Einrichtung zum Befestigen eines landwirtschaftlichen Geräts in Form einer Egge an einem Schlepper. Ein Schwenkhebel ist über Kugelgelenke an mit dem Fahrzeug befestigten Lenkern verbunden. Der Schwenkhebel weist mittig einen vertikalen Gelenkzapfen auf, an dem längs zwei Längsträger der Egge über schräg verlaufende Tragplatten angelenkt sind. An den beiden Stirnseiten weist der Schwenkhebel sich in Fahrtrichtung und in Stirnseiten der Längsträger erstreckende Zapfen auf. Zwischen den Stirnseiten der Längsträger und dem Schwenkhebel sind Druckfedern angeordnet, gegen die die Egge um die mittlere vertikale Achse des Gelenkzapfens begrenzte seitliche Schwenkbewegungen ausführen kann.

Die DE 33 22 030 A1 zeigt ein Frontmähwerkzeug mit um vertikale Achsen rotierenden Mähwerken. Ein diese tragender Getriebekasten ist über eine sich in Fahrtrichtung und horizontal erstreckende Pendelachse an einem fest mit dem Fahrzeug verbundenen Schwenkbock angelenkt. Hierdurch ist lediglich eine begrenzte Pendelbewegung um die horizontale Achse quer zur Fahrtrichtung möglich. Es besteht die Gefahr, dass bei einem Überfahren von Bodenunebenheiten relative Bewegungen des Trägerfahrzeuges/Traktors aufgrund der Hebelgesetzte verstärkt auf das Arbeitswerkzeug übertragen werden.

Die EP 400 285 A2 zeigt eine Vorrichtung zum Anbau eines entsprechenden Mähwerks mit ebenfalls in vertikale Achsen rotierenden Mähtrommeln, die über einen sie tragenden Maschinenrahmen und ein Parallelogrammgestänge an einem fest mit dem Fahrzeug verbundenen Tragarm angelenkt sind. Es ist lediglich mittels des Parallelogrammgestänges eine Auf- und Abbewegung sämtlicher Mähwerke insgesamt einheitlich möglich. Derartige Arbeitsgeräte, bei denen das Arbeitswerkzeug an einem Anbaurahmen mittels Parallelogrammgestängen getragen ist, sind auch aus der Praxis bekannt und weisen auch den gleichen Nachteil auf.

Der Erfindung liegt die Aufgabe zugrunde, unter Vermeidung der vorgenannten Nachteile ein Arbeitsgerät zu schaffen, bei dem in einfacher Weise unter Verminderung der Arbeitsbelastung des Fahrzeugs in unebenem Gelände eine begrenzte Beweglichkeit des Arbeitswerkzeugs in mehreren Richtungen zur Anpassung an Unebenheiten zur Bearbeitung des Geländes und zum Ausweichen bei Hindernissen möglich ist.

Erfindungsgemäß wird die genannte Aufgabe durch ein Arbeitsgerät nach Anspruch 1 gelöst.

Dadurch, dass (gedachte) Verlängerungen von Mittelachsen von zwei Lenkerstangen sich in einem vor dem Arbeitswerkzeug liegenden Punkt schneiden, wird so ein virtueller Zugpunkt geschaffen, von dem aus das Arbeitswerkzeug (virtuell) gezogen wird, wodurch die Voraussetzungen geschaffen werden, dass bei gelenkiger Anlenkung der Lenkerstangen das Arbeitswerkzeug nicht nur bei Kurvenfahrt dieser folgt, sondern bei Auftreten eines Hindernisses sich nicht insgesamt anhebt, sondern zum einen im Bereich des Hindernisses auf einer Seite anhebt, während die andere Seite weiter auf dem Boden verbleibt und gleichzeitig im Bereich des Hindernisses nach rückwärts ausweichen kann, wodurch insgesamt die Achsbelastung des Fahrzeugs vermindert wird, dennoch aber das Arbeitswerkzeug dicht bodennah verbleibt und damit ein ungleichmäßiges Mähen vermieden wird.

Das Arbeitsgerät weist, insbesondere auch gegenüber dem Gegenstand der DE 100 19 378 A1, den Vorteil eines noch stabileren Fahrverhaltens und ruhigeren Laufs auf, da der Zugpunkt weiter nach vorn einstellbar ist. Ein weiterer Vorteil ist eine bessere Lenkfunktion für das Arbeitswerkzeug. Durch die Geometrie der Anordnung der Lenkerstangen, die durch eine zusätzliche Zugeinrichtung verstärkt werden kann, ergibt sich eine Entlastung des Arbeitswerkzeugs. Bei Hindernissen kann sich das Arbeitswerkzeug seitlich um den weiter vorn liegenden virtuellen Zugpunkt und durch die Entlastungsfunktion nach oben bzw. die Überlagerung beider Funktionen drehen und dadurch besser ausweichen. Bewegungen des Trägerfahrzeugs bei Überfahren von Bodenunebenheiten werden aufgrund der Lenkergeometrie und Anordnung bei der Übertragung auf dem Arbeitswerkzeug deutlich reduziert.

Während die Lenkerstangen grundsätzlich, ausgehend von dem Anbaurahmen direkt am Arbeitswerkzeug angelenkt sein können, sieht eine bevorzugte Ausgestaltung vor, dass das Arbeitswerkzeug über einen fest mit ihm verbundenen Tragbock mit den Lenkerstangen in Verbindung steht. Hierdurch ist es möglich, dass das Arbeitswerkzeug über Normverbindstellen mit dem Tragbock (starr) verbunden ist bzw. an diesem unterschiedliche Arbeitswerkzeuge angeordnet werden können.

Die erfindungsgemäße Lösung eignet sich vor allem für ein an der Frontseite eines Fahrzeugs, wie eines Traktors, angebautes Arbeitsgerät, bei dem demgemäß der Schnittpunkt der der Lenkerstangen auf dem Befestigungspunkt des Arbeitsgeräts abgewandten Seite desselben liegt.

Die unteren Lenkerstangen bilden mit ihre Anlenkpunke verbindenden Teilen von Anbaurahmen einerseits und Tragbock bzw. Arbeitswerkzeug andererseits in Grundstellung ein Lenktrapez, das sich auf den vorerwähnten virtuellen Zugpunkt hin verjüngt, von dem aus die Zugkräfte in das Arbeitsgerät eingeleitet werden. Während grundsätzlich eine dritte Lenkerstange auch unterhalb der beiden anderen genannten Lenkerstangen angeordnet sein könnte, sieht eine äußerst bevorzugte Ausgestaltung vor, dass die dritte Lenkerstange oberhalb der beiden unteren Lenkerstangen angeordnet ist. Die dritte Lenkerstange ist mittig zwischen den beiden unteren Lenkerstangen angeordnet, so dass diese in vertikaler Projektion symmetrisch zur dritten mittleren Lenkerstange angeordnet sind.

Während prinzipiell die dritte und die unteren Lenkerstangen - bei Beibehaltung der Zueinandergeneigtheit der unteren Lenkerstange parallel zueinander ausgerichtet sein können, sieht eine äußerst bevorzugte Weiterbildung der Erfindung vor, dass eine Verlängerung der Mittelachse der dritten Lenkerstange in Grundstellung die Verlängerungen der Mittelachsen der unteren Lenkerstangen in deren Schnittpunkt schneidet, d.h., die Verlängerungen der Mittelachsen sämtlicher Lenkerstangen schneiden sich in einem gemeinsamen Punkt, dem virtuellen Zugpunkt.

In weiteren bevorzugten Ausgestaltungen ist vorgesehen, dass die Lenkerstangen oberhalb des Arbeitswerkzeugs angeordnet sind und/oder dass die Lenkerstangen mittels Kardangelenken angelenkt sind. Insbesondere durch letztere Ausgestaltung wird eine Beweglichkeit des Arbeitswerkzeugs in allen Richtungen ermöglicht. Um die Beweglichkeit in ihrem Ausmaße zu begrenzen, sieht die Erfindung in Weiterbildung eine Begrenzung der Beweglichkeit des Arbeitswerkzeugs relativ zum Anbaurahmen vor, wobei hierzu vorzugsweise mechanische Anschläge vorgesehen sind. In konkreter Ausbildung kann die Begrenzung der Beweglichkeit dadurch geschehen, dass Querstreben des Tragbocks sich oberhalb und unterhalb von Längsstreben des Anbaurahmens hin erstrecken und/oder dass eine Vertikalstrebe des Tragbocks sich zwischen Längsstreben des Anbaurahmens erstreckt. Während die Lenkerstangen grundsätzlich eine vorgegebene feste Länge aufweisen können, kann, insbesondere zur Anpassung der Haltehöhe des Arbeitswerkzeugs vorgesehen sein, dass mindestens eine der Lenkerstangen, vorzugsweise die dritte Lenkerstange, eine einstellbare, aber während des Betriebs fest vorgegebene Länge aufweist.

Zusätzlich kann in einer Weiterbildung vorgesehen sein, dass zwischen Arbeitswerkzeug und Anbaurahmen eine Zugeinrichtung angeordnet ist, wobei die Zugeinrichtung insbesondere axial nachgiebig und beispielsweise durch eine mechanische, pneumatische oder hydraulische Feder gebildet ist. Während das Arbeitswerkzeug üblicherweise z.B. mittels Rädern, Stützwalzen oder Gleittellern (Mähwerken) auf dem Boden aufsitzt und durch diese gehalten wird, wird durch eine solche Zugeinrichtung ein Teil des Gewichts des Arbeitswerkzeugs auf den Anbaurahmen und über diesen auf den Traktor übertragen, so dass das Arbeitswerkzeug hierdurch gehalten bzw. getragen wird und damit nicht mit seinem vollem Gewicht auf dem Boden aufliegt, sondern vielmehr eine Entlastung stattfindet. Hierdurch werden die Bewegungs- und Ausweichmöglichkeiten des Arbeitswerkzeugs bei Kurvenfahrt und/oder auftretenden Hindernissen unterstützt und durch diese Entlastung beim Arbeitsprozess eine bessere Bodenanpassung zur Schonung des Geräts und bodennahe Komponenten oder Komponenten mit Bodenkontakt, wie Stützwalze, Stützteller oder dergleichen, erreicht. Weiterhin erfolgt eine Belastung der Trägerfahrzeugachsen, wodurch die Schlupfgefahr reduziert und eine bessere Lenkfähigkeit des Trägerfahrzeugs erreicht wird. Die Zugeinrichtungen können aus einer mittig angeordneten Feder der genannten Federn bestehen. Es können aber auch beispielsweise zwei Zugeinrichtungen seitlich neben oder innerhalb des Tragbockes und des Anbaurahmens vorgesehen sein, wobei diese beiden Teile über die Zugeinrichtung verbunden sind, um das Gewicht oder die auftretenden Kräfte vom Arbeitswerkzeug auf das Trägerfahrzeug zu übertragen.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im Einzelnen erläutert ist. Dabei zeigt:
- Fig. 1: eine Seitenansicht einer bevorzugten Ausführungsform des erfindungsgemäßen Arbeitsgeräts;
- Fig. 1a: eine Seitenansicht der grundsätzlich gleichen Ausführungsform des Arbeitsgeräts wie in der Fig. 1 mit einer elastischen Zugeinrichtung in Form einer Feder;

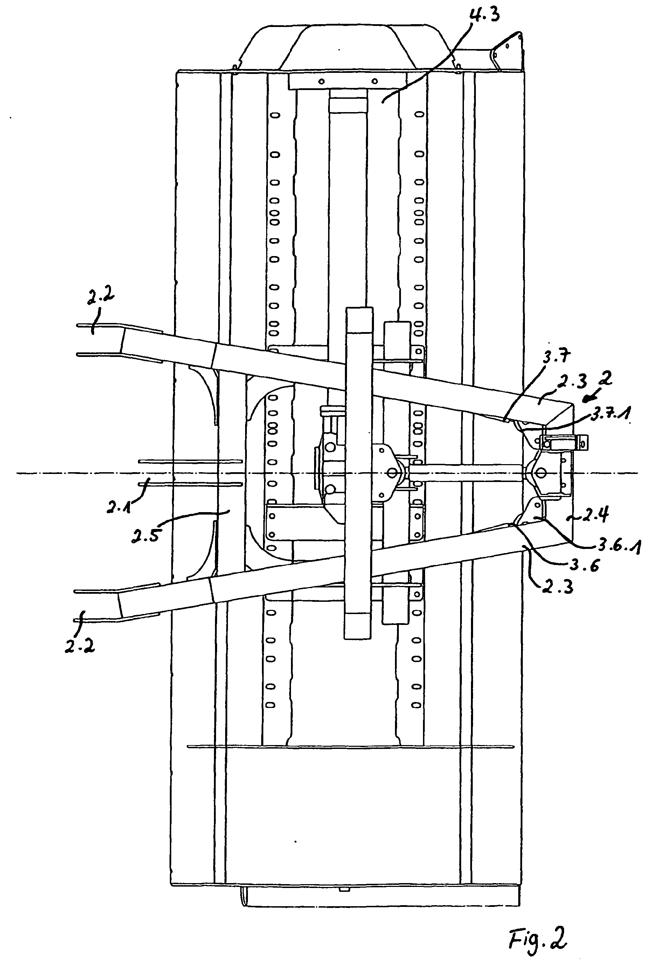

- Fig. 2: eine Draufsicht auf das Arbeitsgerät der Fig. 1;

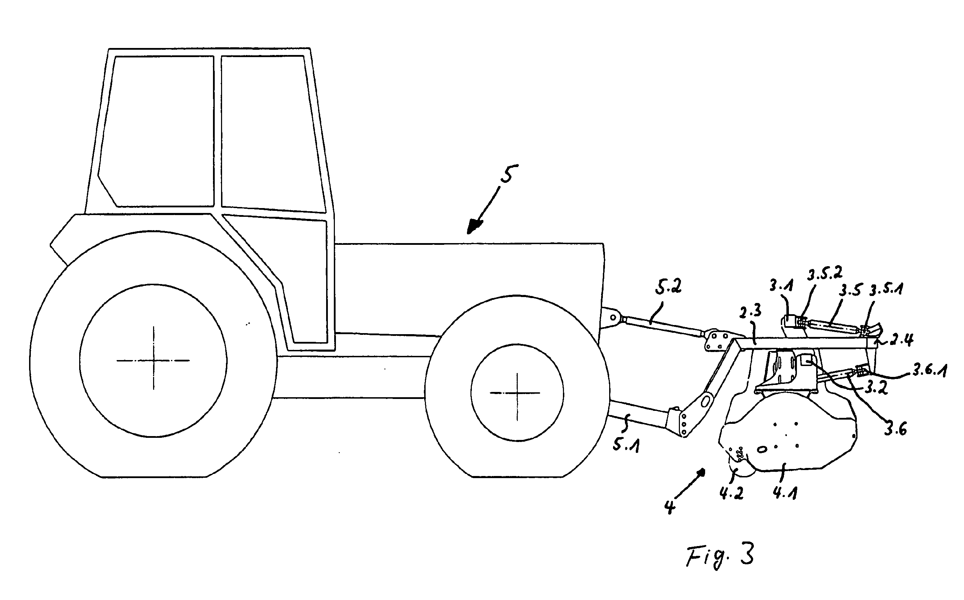

- Fig. 3: eine Seitenansicht des erfindungsgemäßen Arbeitsgeräts in Arbeitsstellung, angebaut an der Vorderseite eines Traktors;

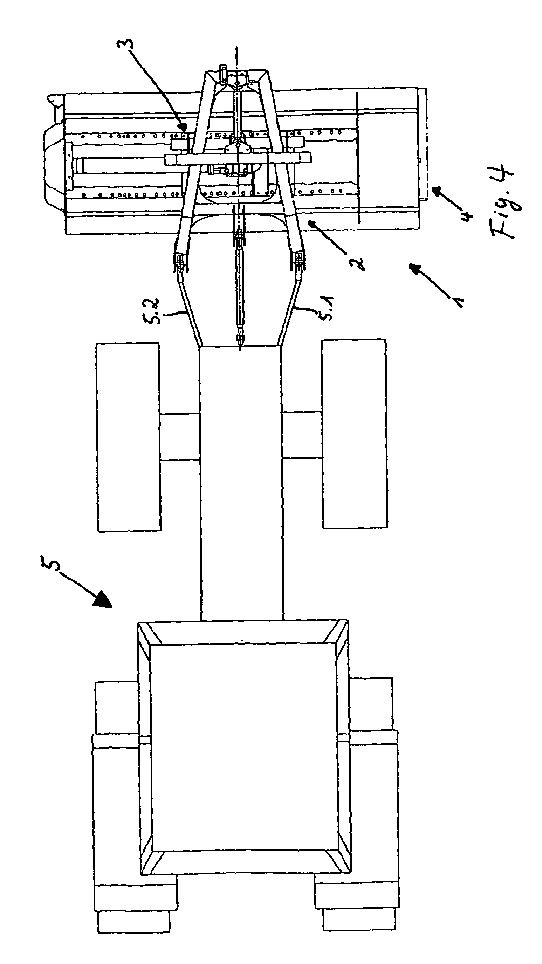

- Fig. 4: das am Traktor angebaute Arbeitsgerät in Draufsicht in Normalbetriebsstellung;
- Fig. 5: das am Traktor angebaute Arbeitsgerät bei Kurvenfahrt des letzteren;
- Fig. 6: ein am Traktor angebautes Arbeitsgerät in Frontansicht bei Normalstellung;
- Fig. 7: das am Traktor angebaute Arbeitsgerät in einer durch ein Hindernis angehobenen Stellung; und
- Fig. 8: eine Seitenansicht des erfindungsgemäßen Arbeitsgeräts bei Anbau am Heck eines Traktors.

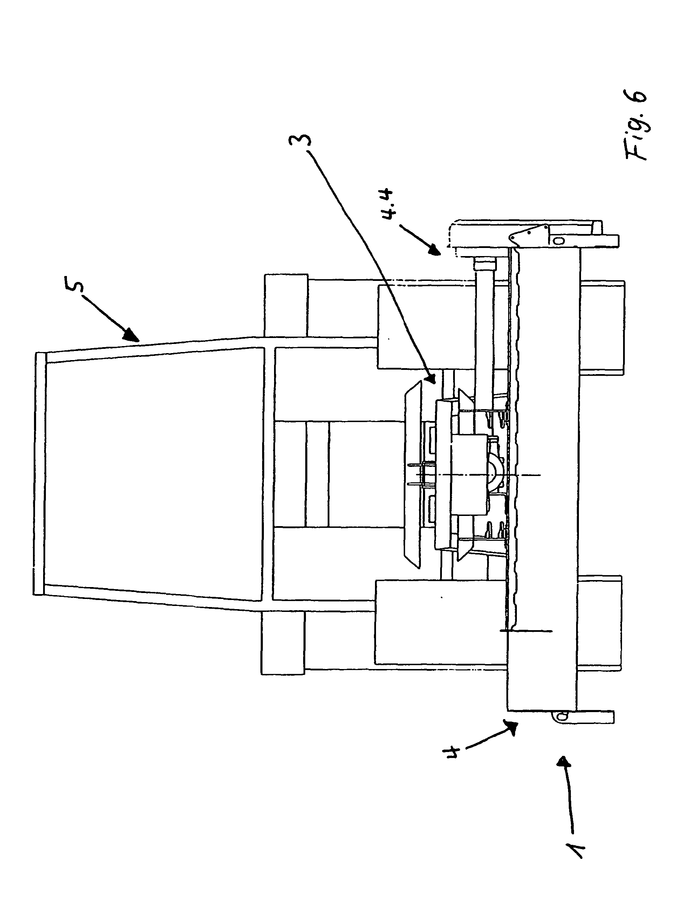

Das erfindungsgemäße Arbeitsgerät 1 weist einen Anbaurahmen 2 zum Anbau des Arbeitsgeräts 1 an einem Fahrzeug, wie an einem Traktor, auf. Das Arbeitsgerät 1 hat weiterhin einen mit dem Anbaurahmen 2 verbundenen, aber zu diesem begrenzt beweglichen Tragbock 3, mit dem wiederum fest das eigentliche Arbeitswerkzeug 4, wie ein Mäher oder Mulcher mit Mulchergehäuse 4.1, Stützwalze 4.2, Rotor und Antrieb 4.4 (Fig. 6) verbunden ist. Der Anbaurahmen 2 weist eine obere und zwei untere rückwärtige Befestigungspunkte 2.1, 2.2 in Form von Befestigungslaschen zur Verbindung des Arbeitsgeräts mit dem Fahrzeug in einer weiter unten beschriebenen Weise auf.

Der Anbaurahmen 2 hat zwei sich in Normal- oder Ruhestellung im Wesentlichen horizontal erstreckende Längsträger 2.3, die am vorderen Ende durch einen Querträger 2.4 und dem rückwärtigen Bereich vor den Laschen 2.1, 2.2 durch einen Querträger 2.5 miteinander starr verbunden sind, wobei die Träger 2.3-2.5 den eigentlichen Rahmen bilden.

Der Tragbock 3 weist zwei übereinander angeordnete Querträger 3.1, 3.2 auf, die mittig über eine Vertikalstrebe 3.3 starr miteinander verbunden sind und die sich beidseitig über die Längsträger 2.3 des Anbaurahmens 2 hinweg erstrecken. Am unteren Querträger 3.2 des Tragbocks 3 finden sich Befestigungswinkel 3.4 angebracht, mit deren Unterseite das eigentliche Arbeitswerkzeug 4 befestigt ist.

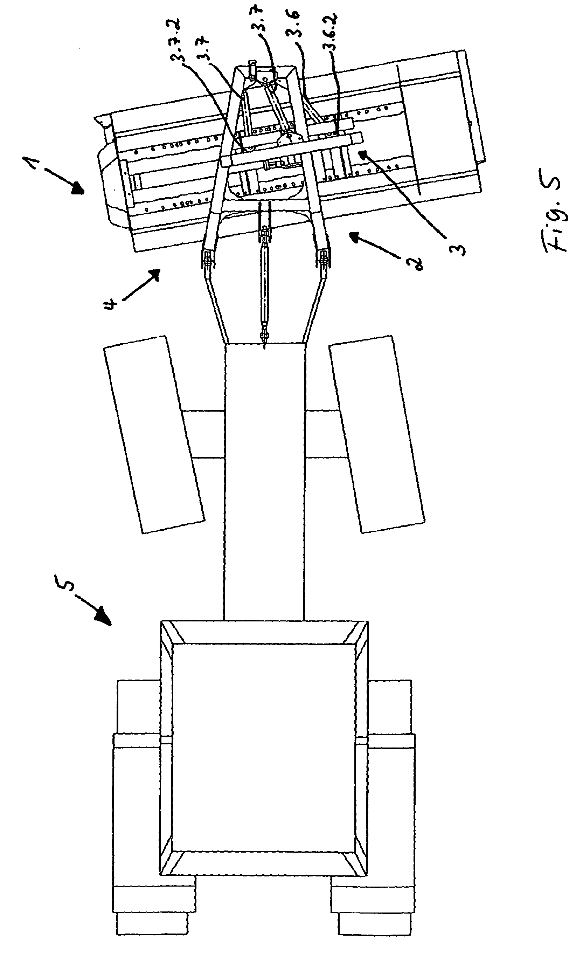

Der Tragbock 3 - und mittelbar über diesen auch das Arbeitswerkzeug 4 - sind mit dem Anbaurahmen 2 über eine mittige obere Lenkerstange 3.5 und zwei untere Lenkerstangen 3.6, 3.7 (hierzu auch Fig. 5) verbunden, wobei die Lenkerstangen 3.5-3.7 jeweils mit dem Tragbock 3 und dem Anbaurahmen 2 über Kardangelenke 3.5.1, 3.5.2, 3.6.1, 3.6.2, 3.7.1, 3.7.2 angelenkt sind.

Die unteren Lenkerstangen 3.6 und 3.7 sind dabei so angeordnet, dass sich in Ruhestellung die Verlängerungen V1, V2 ihrer Mittelachsen M1, M2 in einem den Befestigungspunkten 2.1, 2.2 abgewandten Seite des Arbeitsgeräts 1, also vor dem Arbeitsgerät 1 liegenden Punkt A, dem virtuellen Zugpunkt, treffen. Bei der dargestellten bevorzugten Ausgestaltung schneidet darüber hinaus die Verlängerung V3 der Mittelachse M3 der Zugstange 3.5 die Verlängerungen V1, V2 ebenfalls im virtuellen Zugpunkt A.

Die Lenkerstangen 3.5-3.7 können, beispielsweise über ein Gewinde, in ihrer Länge einstellbar sein. Nach einmal vorgegebener Einstellung bleiben sie im Betrieb in ihrer Länge aber unveränderlich.

Das erfindungsgemäße Arbeitsgerät ist an den Laschen 2.2 mittels Klauen-Bolzen-Verbindungen über Streben 5.1, 5.2 mit dem Fahrzeug 5 und von den Laschen 2.1 über ein Längsverbindungsglied 5.2 mit dem Fahrzeug 5 verbunden, wobei das Längsverbindungsglied 5.2 ebenfalls eine starre Strebe oder aber auch ein Hydraulikzylinder sein kann. Die Anlenkung kann über Klauen-Bolzen-Verbindung oder auch über Kugelkopfgelenke erfolgen.

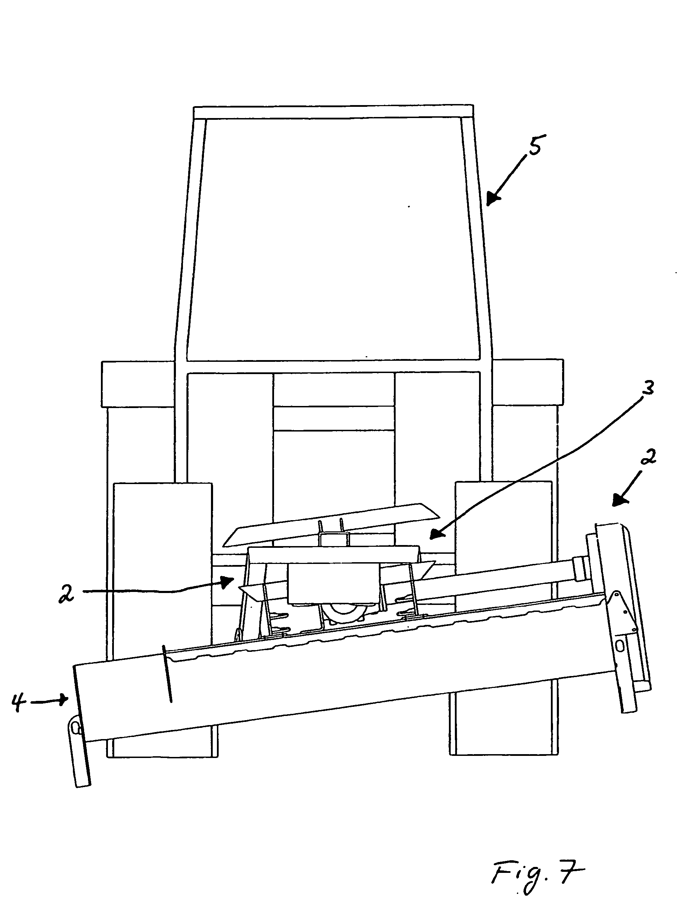

Die erfindungsgemäße Ausbildung des Arbeitsgeräts 1 und insbesondere die Verbindung zwischen Tragbock 3 und Anbaurahmen 2 bewirkt, wie aus der Fig. 5 ersichtlich ist, dass bei einer Kurvenfahrt des Fahrzeugs 5 das Arbeitswerkzeug 4 dieser folgt, d.h. derart verschwenkt, dass die innen liegende Seite des Arbeitswerkzeugs 4 zurück, die außen liegende Seite nach vorne verschwenkt wird. In gleicher Weise erfolgt ein Verschwenken zurück der Seite, die auf ein Hindernis, wie auf ein Hügel oder dergleichen trifft, wobei gleichzeitig die gleiche Seite automatisch angehoben wird, wie dies aus der Fig. 7 ersichtlich ist.

Derart lässt sich mit dem erfindungsgemäßen Arbeitsgerät ein störungs- und verzögerungsfreies Arbeiten unter Vermeidung einer Beschädigung des Arbeitswerkzeugs und des gesamten Arbeitsgeräts ermöglichen.

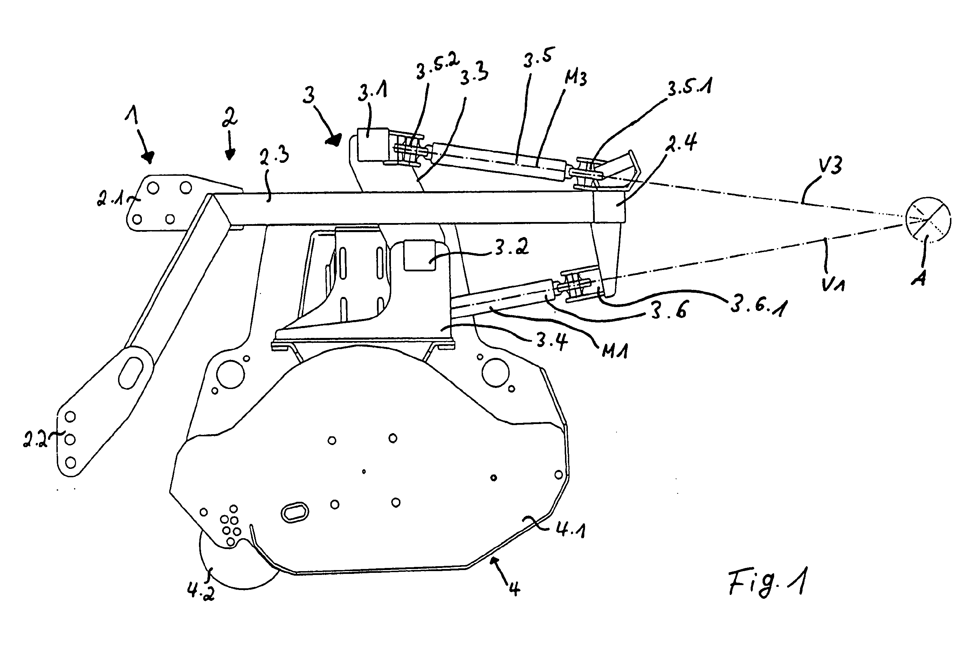

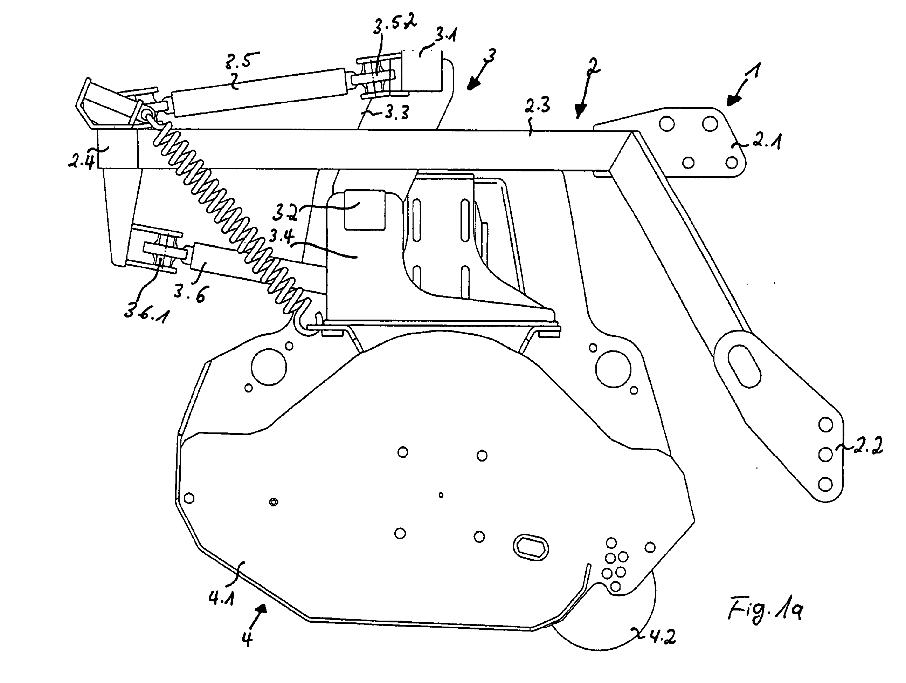

Die Fig. 1a zeigt die grundsätzlich gleiche Ausführungsform des erfindungsgemäßen Arbeitsgeräts 1 wie die Fig. 1 (von der anderen Seite gesehen). Daher sind auch gleiche Teile mit gleichen Bezugszeichen versehen. Zusätzlich ist zwischen dem vorderen Bereich des Anbaurahmens 2 (im Bereich des Kardangelenks 3.5.1) und dem Arbeitswerkzeug 4 - im Bereich des Befestigungswinkels 3.4 - eine elastische Zugeinrichtung 3.8, wie eine Schraubenfeder angeordnet, durch die ein Teil des Gewichts des Arbeitswerkzeugs über den Anbaurahmen 2 auf dem Fahrzeug übertragen und hierdurch das Ausweichen des Arbeitswerkzeugs bei Bodenunebenheiten von Hindernissen erleichtert wird. Die Zugeinrichtung 3.8 kann durch eine pneumatische oder hydraulische oder einer andersartigen mechanischen Feder gebildet sein.

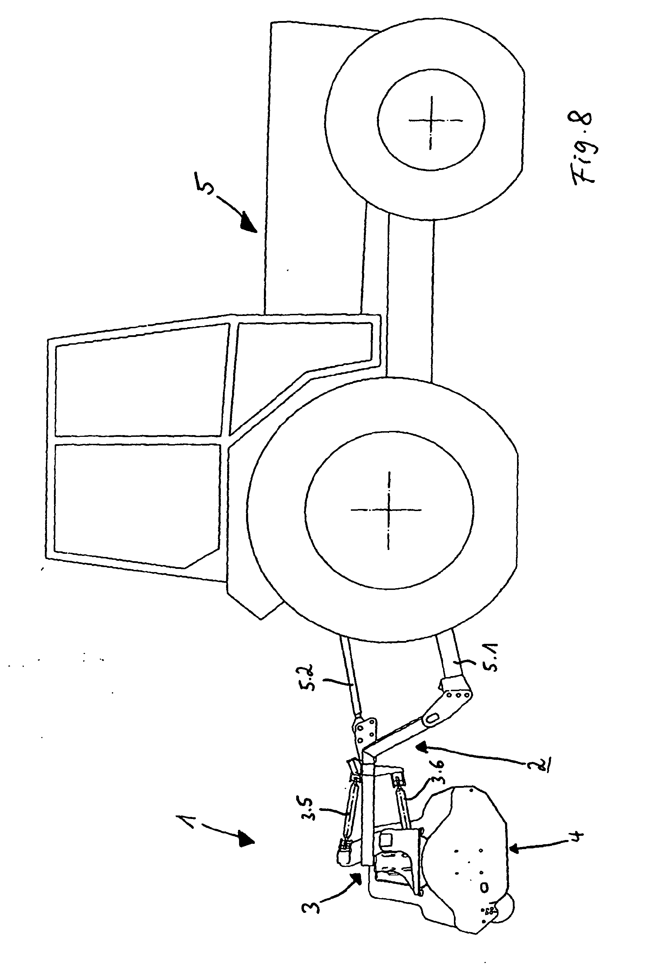

Die Fig. 8 zeigt den Anbau eines erfindungsgemäßen Arbeitsgeräts 1 am Heck eines Fahrzeugs 5, hier eines Traktors. Gleiche Teile sind mit gleichen Bezugszeichen versehen. Soll das Arbeitsgerät 1 dabei von dem Fahrzeug 5 gezogen werden, so ist wiederum darauf zu achten, dass die Lenkerstangen 3.6, 3.7 in Fahrtrichtung schräg aufeinander zulaufen, also der virtuelle Zugpunkt A in Fahrtrichtung vor den Lenkerstangen 3.6, 3.7 und damit vor dem Arbeitswerkzeug 4 liegt und vorzugsweise sich die Verlängerung der Mittelachse der Lenkerstange 3.5 ebenfalls in Fahrtrichtung vor dem Arbeitswerkzeug 4 mit den entsprechenden Verlängerungen der Mittelachsen der Lenkerstangen 3.6, 3.7 schneidet, insbesondere ebenfalls im gleichen virtuellen Zugpunkt A, wie dies aus der Fig. 8 ersichtlich ist.

Wesentlich ist, dass die durch die beweglichen Lenkerstangen auch hier die beschriebene Lenkerstangenfunktion beim Überfahren von Bodenunregelmäßigkeiten unter Beibehaltung größter Nähe des Arbeitswerkzeugs zum Boden über seine gesamte Breite hin - dass sich also nicht eine Seite zu weit vom Boden abhebt- und beim Anfahren ein Hindernis gegeben ist.

### Bezugszeichenliste

- 1: Arbeitsgerät
- 2: Anbaurahmen
- 2.1, 2.2.: Befestigungspunkte
- 2.1: Längsträger
- 2.3-2.5: Träger
- 3: Tragbock
- 3.1, 3.2: Querträger
- 3.3: Vertikalstrebe
- 3.4: Befestigungswinkel
- 3.5-3.7: Lenkerstangen
- 3.5.1, 3.5.2, 3.6.1, 3.6.2, 3.7.1, 3.7.2: Kardangelenke
- 3.8: Zugeinrichtung
- 4: Arbeitswerkzeug
- 4.1: Mulchergehäuse
- 4.2: Stützwalze
- 4.4: Rotor, Antrieb
- 5: Fahrzeug
- 5.1, 5.2: Streben
- 5.2: Längsverbindungsglied
- A: virtueller Zugpunkt
- M1, M2, M3: Mittelachsen
- V1, V2: Verlängerungen

## Patentansprüche

1. Arbeitsgerät mit einem Anbaurahmen und einem Arbeitswerkzeug, wobei das Arbeitswerkzeug (4) über drei gelenkig angelenkte Lenkerstangen (3.5, 3.6, 3.7) mit dem Anbaurahmen (2) verbunden ist, wobei Verlängerungen (V1, V2) von Mittelachsen (M1, M2) zweier unterer Lenkerstangen (3.6, 3.7) sich derart in einem vor dem Arbeitswerkzeug (4) liegenden Zugpunkt (M) schneiden, dass das Arbeitswerkzeug (4) gezogen wird, und wobei die Lenkerstangen (3.5-3.7) mittels Kardangelenken (3.5.1, 3.5.2, 3.6.1, 3.6.2, 3.7.1, 3.7.2) angelenkt sind.

2. Gerät nach Anspruch 1, **dadurch gekennzeichnet, dass** das Arbeitswerkzeug (4) über einen fest mit ihm verbundenen Tragbock (3) mit den Lenkerstangen (3.5-3.7) in Verbindung steht.

3. Gerät nach Anspruch 1 oder 2, **dadurch gekennzeichnet, dass** die unteren Lenkerstangen (3.6, 3.7) mit ihre Anlenkpunkte verbindenden Teilen (2.4, 3.2) von Anbaurahmen (2) und Tragbock (3) bzw. Arbeitswerkzeug (4) in Grundstellung ein Lenktrapez bilden.

4. Gerät nach einem der vorangehenden Ansprüche, **dadurch gekennzeichnet, dass** die dritte Lenkerstange (3.5) oberhalb der beiden unteren Lenkerstangen (3.6, 3.7) angeordnet ist.

5. Gerät nach einem der vorangehenden Ansprüche, **dadurch gekennzeichnet, dass** eine Verlängerung (V3) der Mittelachse (M3) der dritten Lenkerstange (3.5) in Grundstellung die Verlängerungen (V1, V2) der Mittelachsen (M1, M2) der unteren Lenkerstangen in deren Schnittpunkt schneidet.

6. Gerät nach einem der vorangehenden Ansprüche, **dadurch gekennzeichnet, dass** die Lenkerstangen (3.5-3.7) oberhalb des Arbeitswerkzeugs (4) angeordnet sind.

7. Gerät nach einem der vorangehenden Ansprüche, **dadurch gekennzeichnet, dass** die Lenkerstangen eine feste Länge aufweisen.

8. Gerät nach einem der Ansprüche 1 bis 6, **dadurch gekennzeichnet, dass** die Lenkerstangen (3.5-3.7) eine einstellbare, aber während des Betriebs festgegebene Länge aufweisen.

9. Gerät nach einem der vorangehenden Ansprüche, **dadurch gekennzeichnet, dass** zwischen Arbeitswerkzeug (4) und Anbaurahmen (2) eine Zugeinrichtung (3.8) angeordnet ist.

10. Gerät nach Anspruch 8, **dadurch gekennzeichnet, dass** die Zugeinrichtung (3.8) axial nachgiebig ist.

11. Gerät nach Anspruch 9 oder 10, **dadurch gekennzeichnet, dass** die Zugeinrichtung (3.8) mindestens eine mechanische, pneumatische oder hydraulische Feder ist.

12. Gerät nach einem der vorangehenden Ansprüche, **gekennzeichnet durch** eine Begrenzung der Beweglichkeit des Arbeitswerkzeugs (4) relativ zum Anbaurahmen (2).

13. Gerät nach Anspruch 12, **gekennzeichnet durch** mechanische Anschläge.

14. Gerät nach Anspruch 11 oder 12, **dadurch gekennzeichnet, dass** Querstreben (3.1, 3.2) des Tragbocks (3) sich oberhalb und unterhalb von Längsstreben (2.3) des Anbaurahmens (2) hin erstrecken.

15. Gerät nach einem der Ansprüche 12 bis 14, **dadurch gekennzeichnet, dass** eine Vertikalstrebe (3.3) des Tragbocks (3) sich zwischen Längsstreben (2.3) des Anbaurahmens (2) erstreckt.

16. Gerät nach einem der vorangehenden Ansprüche, **dadurch gekennzeichnet, dass** der Schnittpunkt der Lenkerstangen (3.6, 3.7) auf der den Befestigungspunkten (2.1, 2.2) abgewandten Seite des Geräts (1) liegt.

## Claims

1. Device with an attachment frame and a tool, where the tool (4) is attached to the attachment frame (2) by three flexibly hinged steering rods (3.5, 3.6, 3.7) where extensions (V1, V2) of the centre lines (M1, M2) of two lower steering rods (3.6, 3.7) intersect in such a manner at a draw point (M) in front of the tool (4), that the tool (4) is drawn; and where the steering rods (3.5- 3.7) are hinged by cardan joints (3.5.1, 3.5.2, 3.6.1, 3.6.2, 3.7.1, 3.7.2).

2. Device according to claim 1 **characterized in that** the tool (4) is connected to the steering rods (3.5-3.7) by a supporting pedestal (3) firmly fixed to it.

3. Device according to claims 1 or 2 **characterized in that** the lower steering rods (3.6, 3.7) in their normal positions with their elements connecting the pivoting points (2.4, 3.2) of the attachment frame (2) and the supporting pedestal (3) or the tool (4) respectively form an Ackermann steering.

4. Device according to one of the preceding claims **characterized in that** the third steering rod (3.5) is arranged above the two lower steering rods (3.6, 3.7).

5. Device according to one of the preceding claims, **characterized in that** an extension (V3) of the centre line (M3) of the third steering rod (3.5) in a normal position intersects the extensions (V1, V2) of the centre lines (M1, M2) of the lower steering rods at their point of intersection.

6. Device according to one of the preceding claims **characterized in that** the steering rods (3.5-3.7) are arranged above the tool (4).

7. Device according to one of the preceding claims **characterized in that** the steering rods have a fixed length.

8. Device according to claims 1 to 6 **characterized in that** the steering rods (3.5-3.7) have an adjustable but during operation fixed length.

9. Device according to one of the preceding claims **characterized in that** a draw gear (3.8) is arranged between the tool (4) and attachment frame (2).

10. Device according to claim 8 **characterized in that** the drawing device (3.8) is axially yielding.

11. Device according to one claims 9 or 10 **characterized in that** the drawing device (3.8) is at least a mechanical, pneumatic or hydraulic spring.

12. Device according to one of the preceding claims **characterized in that** the flexibility of the tool (4) relative to the attachment frame (2) is limited.

13. Device according to claim 12 **characterized by** mechanical stops.

14. Device according to claims 11 or 12 **characterized in that** cross members (3.1, 3.2) of the supporting pedestal (3) extend above and below longitudinal rods (2.3) of the attachment frame (2).

15. Device according to claims 12 or 14 **characterized in that** a vertical member (3.3) of the supporting pedestal (3) extends between longitudinal rods (2.3) of the attachment frame(2)

16. Device according to one of the preceding claims **characterized in that** the intersection of the steering rods (3.6, 3.7) is located on the side facing away from the attachment points (2.1, 2.2) of the device (1).

## Revendications

1. Outillage avec un cadre surajouté et un outil de travail, ledit outil de travail (4) étant relié au cadre surajouté (2) par l'intermédiaire de trois barres directrices (3.5, 3.6, 3.7) articulées et des prolongations (V1, V2) des axes médians (M1, M2) des deux barres directrices inférieures (3.6, 3.7) s'y coupant en un point d'intersection et de traction (M) situé devant l'outil de travail (4) d'une manière, que l'outil de travail (4) est tracté, et les barres directrices (3.5-3.7) étant articulées par des cardans (3.5.1, 3.5.2, 3.6.1, 3.6.2, 3.7.1, 3.7.2).

2. Outillage selon la revendication 1, **caractérisé en ce que** l'outil de travail (4) est rattaché aux barres directrices (3.5-3.7) par l'intermédiaire d'un chevalet (3) qui lui est solidaire.

3. Outillage selon la revendication 1 ou 2, **caractérisé en ce que** les barres directrices inférieures (3.6. 3. 1) décrivent en position de repos un trapèze par les pièces (2.4, 3.2) du cadre (2) et le chevalet (3) ou l'outil de travail (4) reliant leurs points d'articulation.

4. Outillage selon l'une des revendications qui précède, **caractérisé en ce que** la troisième barre directrice (3.5) est placée au-dessus des deux autres barres directrices (3.6, 3.7).

5. Outillage selon l'une des revendications qui précède, **caractérisé en ce qu'**une prolongation (V3) de l'axe médian (M3) de la troisième barre directrice (3.5) coupe en position de repos les prolongations (V1, V2) des axes médians (M1, M2) des barres directrices inférieures en leur point d'intersection.

6. Outillage selon l'une des revendications précédentes, **caractérisé en ce que** les barres directrices (3.5-3.7) sont disposées au-dessus de l'outil de travail (4).

7. Outillage selon l'une des revendications précédentes, **caractérisé en ce que** les barres directrices ont une longueur fixe.

8. Outillage selon l'une des revendications 1 à 6 **caractérisé en ce que** les barres directrices (3.5-3.7) ont une longueur réglable mais cependant définie pendant le service.

9. Outillage selon l'une des revendications précédentes, **caractérisé en ce qu'**entre l'outil de travail (4) et le cadre (2) est disposé un dispositif de traction (3.8).

10. Outillage selon la revendication 8, **caractérisé en ce que** le dispositif de traction (3.8) est déformable dans le sens axial.

11. Outillage selon la revendication 9 ou 10, **caractérisé en ce que** le dispositif de traction (3.8) est constitué par au moins un ressort mécanique, pneumatique ou hydraulique.

12. Outillage selon l'une des revendications précédentes, **caractérisé par** la limitation de la mobilité de l'outil de travail (4) par rapport au cadre surajouté (2).

13. Outillage selon la revendication 12, **caractérisé par** des butées mécaniques.

14. Outillage selon la revendication 11 ou 12, **caractérisé en ce que** des entretoises (3.1, 3.2) du chevalet (3) s'étendent au-dessus et en dessous des tiges longitudinales (2.3) du cadre surajouté (2).

15. Outillage selon l'une des revendications 12 à 14, **caractérisé en ce qu'**une tige verticale (3.3) du chevalet (3) s'étend entre des tiges longitudinales (2.3) du cadre surajouté (2).

16. Outillage selon l'une des revendications précédentes, **caractérisé en ce que** le point d'intersection des barres directrices (3.6, 3.7) est situé sur la face de l'outillage (1) opposée aux points de fixation (2.1, 2.2).
